# EUROPEAN PATENT APPLICATION

(11) **EP 0 918 424 A2**
(43) Date of publication of application: **26.05.1999**
(21) Application number: 98308899.8
(22) Date of filing: 30.10.1998
(51) Int. Cl.: H04L 29/06, G06F 17/30, G06F 17/60

(54) **Automatic association of predefined user data with query entry fields**

(30) Priority: 24.11.1997 US 977293
(71) Applicant: INTERNATIONAL BUSINESS MACHINES CORPORATION, Armonk, NY 10504 (US)
(72) Inventor: Donnelly, Vanessa, Styvechale, Coventry (GB); Burton, Denise Marie, Austin, Texas 78729 (US)
(74) Representative: Ling, Christopher John

(57) **Abstract**

A method and system in a computer network for allowing predefined personal user information to be automatically accessed and utilized by remote network sites having interactive query fields. Initially, a personal user information list is compiled such that the personal user information list includes personal user information that may be utilized in association with on-line electronic forms. The personal user information list is thereafter prestored at a local network site. A remote network site having an interactive query field wherein users may enter personal user information is then accessed. The personal user information list is thereafter automatically accessed, in response to accessing the remote network site having the interactive query field. Finally, personal user information accessed from the personal user information list is automatically entered within the interactive query field, such that the personal user information does not have to be repetitively re-keyed within the interactive query field.

## Description

### Technical Field

The present invention relates to improved information-retrieval methods and systems. In particular, the present invention relates to improved information-retrieval methods and systems utilized in association with computer networks. Still more particularly, the present invention relates to improved information-retrieval methods and systems that allow users to store and automatically retrieve predefined user data to be utilized in association with query entry fields maintained within so-called World Wide Web "pages."

### Description of the Related Art

The development of computerized information resources, such as remote networks, allows users of data-processing systems to link with other servers and networks, and thus retrieve vast amounts of electronic information heretofore unavailable in an electronic medium. Such electronic information is increasingly displacing more conventional means of information transmission, such as newspapers, magazines, and even television.

In communications, a set of computer networks which are possibly dissimilar from one another are joined together by "gateways" that handle data transfer and the conversion of messages from the sending network to the protocols used by the receiving network, with packets if necessary. A gateway is a device used to connect dissimilar networks (i.e., networks utilizing different communication protocols) so that electronic information can be passed from one network to the other. Gateways transfer electronic information, converting such information to a form compatible with the protocols used by the second network for transport and delivery.

One type of remote network commonly utilized in recent years is the Internet. The term "Internet" is an abbreviation for "internetwork," and refers commonly to the collection of networks and gateways that utilize the TCP/IP suite of protocols, which are well-known in the art of computer networking. TCP/IP is an acronym for "Transport Control Protocol/Interface Program," a software protocol developed by the Department of Defense for communication between computers. The Internet can be described as a system of geographically distributed remote computer networks interconnected by computers executing networking protocols that allow users to interact and share information over the networks. Because of such wide-spread information sharing, remote networks such as the Internet have thus far generally evolved into an "open" system for which developers can design software applications for performing specialized operations or services, essentially without restriction.

Electronic information transferred between data-processing networks is usually presented in hypertext, a metaphor for presenting information in a manner in which text, images, sounds, and actions become linked together in a complex non-sequential web of associations that permit the user to "browse" or "navigate" through related topics, regardless of the presented order of the topics. These links are often established by both the author of a hypertext document and by the user, depending on the intent of the hypertext document. For example, traveLling among links to the word "iron" in an article displayed within a graphical user interface in a data-processing system might lead the user to the periodic table of the chemical elements (i.e., linked by the word "iron"), or to a reference to the use of iron in weapons in Europe in the Dark Ages. The term "hypertext" was coined in the 1960s to describe documents, as presented by a computer, that express the nonlinear structure of ideas, as opposed to the linear format of books, film, and speech.

The term "hypermedia," on the other hand, more recently introduced, is nearly synonymous with "hypertext" but focuses on the nontextual components of hypertext, such as animation, recorded sound, and video. Hypermedia is the integration of graphics, sound, video, or any combination thereof into a primarily associative system of information storage and retrieval. Hypermedia, as well as hypertext, especially in an interactive format where choices are controlled by the user, is structured around the idea of offering a working and learning environment that parallels human thinking -- that is, an environment that allows the user to make associations between topics rather than move sequentially from one to the next, as in an alphabetic list. Hypermedia, as well as hypertext topics, are thus linked in a manner that allows the user to jump from one subject to other related subjects during a search for information. Hyper-link information is contained within hypermedia and hypertext documents, which allow a user to move back to "original" or referring network sites by the mere "click" (i.e., with a mouse or other pointing device) of the hyper-linked topic.

A typical networked system that utilizes hypertext and hypermedia conventions follows a client/server architecture. The "client" is a member of a class or group that uses the services of another class or group to which it is not related. Thus, in computing, a client is a process (i.e., roughly a program or task) that requests a service provided by another program. The client process utilizes the requested service without having to "know" any working details about the other program or the service itself. In a client/server architecture, particularly a networked system, a client is usually a computer that accesses shared network resources provided by another computer (i.e., a server).

A request by a user for news can be sent by a client application program to a server. A server is typically a remote computer system accessible over a remote network such as the Internet. The server scans and searches for raw (e.g., unprocessed) information sources (e.g., newswire feeds or newsgroups). Based upon such requests by the user, the server presents filtered electronic information as server responses to the client process. The client process may be active in a first computer system, and the server process may be active in a second computer system, communicating with one another over a communications medium, thus providing distributed functionality and allowing multiple clients to take advantage of the information-gathering capabilities of the server.

Client and server communicate with one another utilizing the functionality provided by Hypertext-Transfer Protocol (HTTP). The World Wide Web (WWW) or, simply, the "web," includes those servers adhering to this standard (i.e., HTTP) which are accessible to clients via a computer or data-processing system network address such as a Universal Resource Locator (URL). The network address can be referred to as a Universal Resource Locator address. For example, communication can be provided over a communications medium. In particular, the client and server may be coupled to one another via Serial Line Internet Protocol (SLIP) or TCP/IP connections for high-capacity communication. Active within the client is a first process, known as a "browser," which establishes the connection with the server and presents information to the user. The server itself executes corresponding server software which presents information to the client in the form of HTTP responses. The HTTP responses correspond to "web pages" constructed from a Hypertext Markup Language (HTML), or other server-generated data. HTML is a markup language well-known in the computer arts and is utilized principally for developing documents on the World Wide Web. Each "web page" can also be referred to simply as a "page."

The client and server typically display browsers and other remote network data for a user via a graphical user interface. A graphical user interface is a type of display format that enables a user to choose commands, start programs, and see lists of files and other options by pointing to pictorial representations (icons) and lists of menu items on the screen. Choices can be activated generally either with a keyboard or a mouse. Internet services are typically accessed by specifying a unique network address (i.e., Universal Resource Locator). The Universal Resource Locator address has two basic components, the protocol to be used and the object pathname. For example, the Universal Resource Locator address, "http://www.uspto.gov" (i.e., home page for the U.S. Patent and Trademark Office), specifies a hypertext-transfer protocol ("http") and a pathname of the server ("www.uspto.gov"). The server name is associated with a unique numeric value (TCP/IP address).

The evolution of personal computers over the last decade has accelerated the web and Internet toward useful everyday applications. Nearly every computer sold over the last several years has or will, at some point, become "on-line" to an Internet service provider. Somewhere between 20 and 30 million people around the globe use some form of Internet service on a regular basis. The graphical portion of the World Wide Web itself is usually stocked with more than twenty-two million "pages" of content, with over one million new pages added every month.

The World Wide Web is currently being transformed from a primarily publishing and advertising vehicle for companies, academia, and special interest groups into a medium that is far more interactive and commercial. The proliferation in the number of web sites now enables users to purchase goods electronically utilizing "on-line" forms. Increasingly, the use of such on-line forms is no longer limited to electronic commerce. Users are increasingly being required to provide personal details for on-line surveys that promise free gifts, registrations for free software, requests for update information on various products, and so forth. Users are typically prompted to enter such information into query fields displayed within a web page.

The same core set of data is thus requested repeatedly by advertisers, companies, and so on. Users find themselves repeatedly entering the same information in the same format to all manner of varying web sites. Users do not ordinarily wish to spend a vast amount of time filling out on-line forms. Thus, anything that can avoid a user's duplication of effort is beneficial to the user and improves the usability of such interactive interfaces. From the foregoing, it can be appreciated that a need thus exists for a method and system which would allow a user to efficiently enter the same set of core information repeatedly within web page query fields without having to re-type this information each time similar query fields appear within different web pages.

### Disclosure of the Invention

A method and system in a computer network for allowing predefined personal user information to be automatically accessed and utilized by remote network sites having interactive query fields. Initially, a personal user information list is compiled such that the personal user information list includes personal user information that may be utilized in association with on-line electronic forms. The personal user information list is thereafter stored at a local network site. A remote network site having an interactive query field wherein users may enter personal user information is then accessed. The personal user information list is thereafter automatically accessed, in response to accessing the remote network site having the interactive query field. Finally, personal user information accessed from the personal user information list is automatically entered within the interactive query field, such that the personal user information does not have to be repetitively re-keyed within the interactive query field.

### Brief Description of the Drawings

The invention will now be described, by way of example only, with reference to the accompanying drawings, in which:
**FIG. 1** is a pictorial representation of a data-processing system which can be utilized to implement the method and system of the present invention;
**FIG. 2** depicts a block diagram illustrative of selected components in a personal computer system which can be utilized to implement the method and system of the present invention;
**FIG. 3** illustrates a block diagram illustrative of a client/server architecture which can be utilized to implement the method and system of the present invention;
**FIG. 4** depicts a detailed block diagram illustrative of a client/server architecture which can be utilized to implement the method and system of the present invention;
**FIG. 5** is a diagram illustrative of a computer network which can be implemented in accordance with the method and system of the present invention;
**FIG. 6** illustrates a hypertext document contained within a graphical user interface window which can be utilized to implement the method and system of the present invention;
**FIG. 7** depicts an example personal information property table, in accordance with a preferred embodiment of the present invention;
**FIG. 8** illustrates a graphical user interface window in which a personal information properties index is displayed, in accordance with a preferred embodiment of the present invention;
**FIG. 9** depicts a graphical user interface window in which a personal information properties index with expanded folders is displayed, in accordance with a preferred embodiment of the present invention;
**FIG. 10** illustrates a graphical user interface window in which a personal information properties index with expanded index folders and a personal information properties customiser are displayed, in accordance with a preferred embodiment of the present invention;
**FIG. 11** depicts personal information properties service buttons capable of being embedded within an on-line form, in accordance with a preferred embodiment of the present invention; and
**FIG. 12** depicts a flowchart of operations illustrating a method for allowing predefined personal user information to be automatically accessed and utilized by remote network sites having interactive query fields, in accordance with a preferred embodiment of the present invention.

### Detailed Description of the Invention

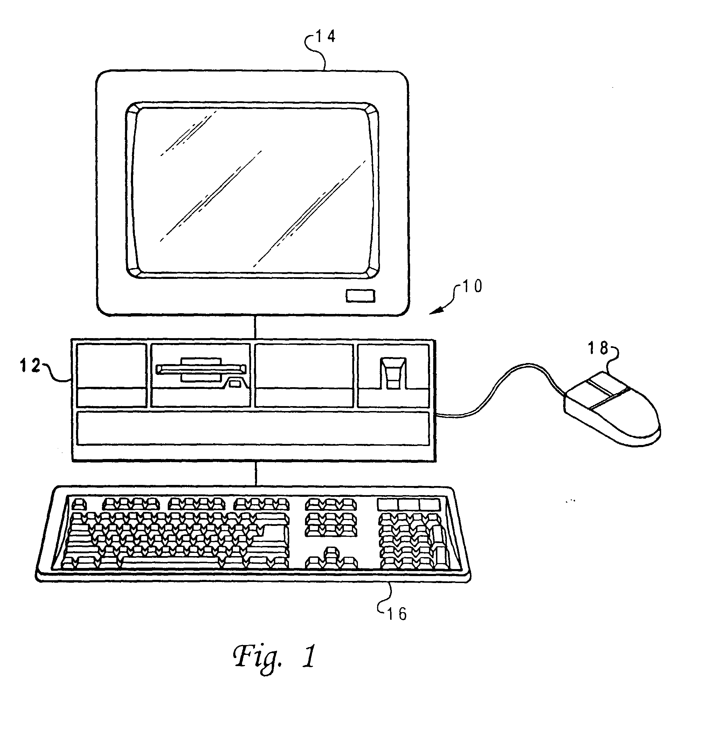

With reference now to the figures and, in particular, with reference to **FIG. 1**, there is depicted a pictorial representation of a data-processing system in which the present invention may be implemented in accordance with a preferred embodiment of the present invention. A personal computer **10** is depicted which includes a system unit **12**, a video display terminal **14**, an alphanumeric input device (i.e., keyboard **16**) having alphanumeric and other keys, and a mouse **18**. An additional input device (not shown), such as a trackball or stylus, also can be included with personal computer **10**. Computer **10** can be implemented utilizing any suitable computer, such as an IBM Aptiva™ computer, a product of International Business Machines Corporation, located in Armonk, N.Y. "Aptiva" is a registered trademark of International Business Machines Corporation.

Although the depicted embodiment involves a personal computer, a preferred embodiment of the present invention may be implemented in other types of data-processing systems, such as, for example, intelligent workstations or mini-computers. Computer **10** also preferably includes a graphical user interface that resides within a machine-readable media to direct the operation of computer **10**. Computer **10** also can be implemented utilizing any suitable computer, such as the IBM RISC/6000 computer, a product of International Business Machines Corporation, located in Armonk, N.Y. "RISC SYSTEM/6000" is a trademark of International Business Machines Corporation, and also can be referred to as the "RS/6000."

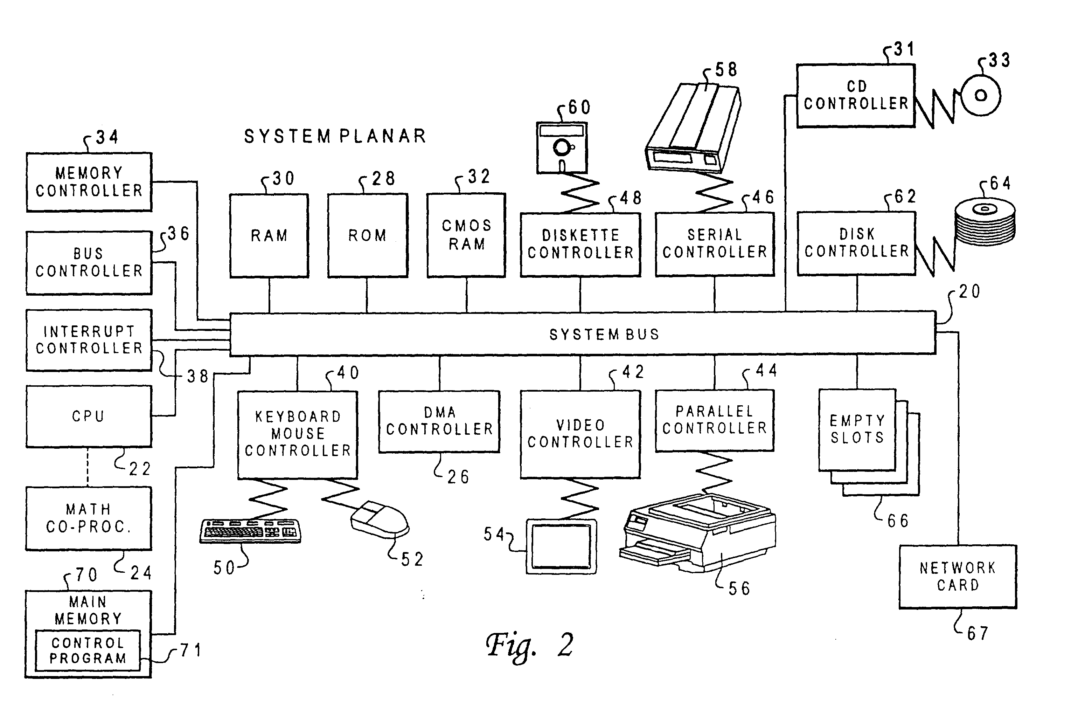

Referring now to **FIG. 2** there is depicted a block diagram of selected components in personal computer **10** of **FIG. 1** in which a preferred embodiment of the present invention may be implemented. Personal computer **10** of **FIG. 1** preferably includes a system bus **20**, as depicted in **FIG. 2**. System bus **20** is utilized for interconnecting and establishing communication between various components in personal computer **10**. Microprocessor or central processing unit (CPU) **22** is connected to system bus **20** and also may have numeric co-processor **24** connected to it. Direct memory access ("DMA") controller **26** also is connected to system bus **20** and allows various devices to appropriate cycles from CPU **22** during large input/output ("I/O") transfers.

CPU **22** is the computational and control unit of personal computer **10**. CPU **22** interprets and executes instructions. CPU **22** has the ability to fetch, decode, and execute instructions and to transfer information to and from other computer resources over system bus **20**. Read-only memory ("ROM") **28** and random-access memory ("RAM") **30** are also connected to system bus **20**. ROM **28** is mapped into the microprocessor **22** address space in the range from 640K to 1 megabyte. CMOS RAM **32** is attached to system bus **20** and contains system-configuration information. Any suitable machine-readable media may retain the graphical user interface of computer **10** of **FIG. 1**, such as RAM **30**, ROM **28**, a magnetic diskette, magnetic tape, or optical disk.

Also connected to system bus **20** are memory controller **34**, bus controller **36**, and interrupt controller **38** which serve to aid in the control of data flow through system bus **20** between various peripherals, adapters, and devices. System unit **12** of **FIG. 1** also contains various I/O controllers, such as those depicted in **FIG. 2**: keyboard and mouse controller **40**, video controller **42**, parallel controller **44**, serial controller **46**, and diskette controller **48**. Keyboard and mouse controller **40** provide a hardware interface for keyboard **50** and mouse **52**. Video controller **42** provides a hardware interface for video display terminal **54**. Parallel controller **44** provides a hardware interface for devices, such as printer **56**. Serial controller **46** provides a hardware interface for devices, such as a modem **58**. Diskette controller **48** provides a hardware interface for floppy-disk unit **60**. Other technologies also can be utilized in conjunction with CPU **22**, such as touch-screen technology or human voice control.

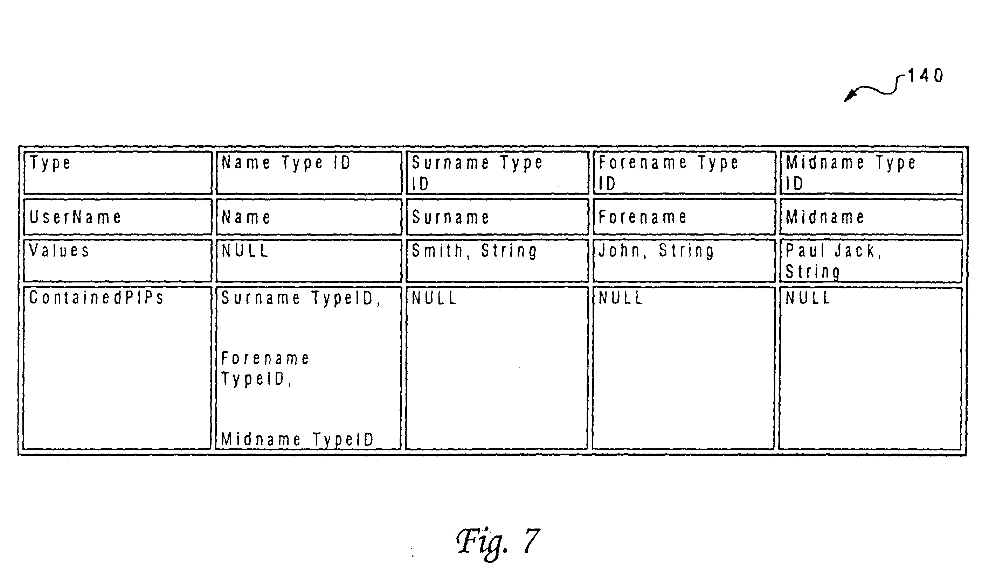

Main memory **70** is connected to system bus **20**, and includes a control program **71**. Control program **71** resides within main memory **70** and contains instructions that when executed on CPU **22** carry out the operations depicted in the logic flowchart of **FIG. 7** described herein. The computer program product also can be referred to as a program product. Control program **71** can support a number of Internet-access tools including, for example, an HTTP-compliant web "browser." Known browser software applications include: Netscape Navigator® ("Netscape"), Mosaic, and the like. Netscape, in particular, provides the functionality specified under HTTP. "Netscape" is a trademark of Netscape, Inc. Mosaic-brand browser is available from the National Centre for Supercomputing Applications (NCSA) in Urbana-Champaign, Illinois. The present invention is designed to operate with any of these known or developing web browsers, in order to provide network navigation aids for web pages displayed with three-dimensional graphics.

Control program **71** also can support other remote network services, such as the file-transfer protocol (FTP) service, which facilitates the transfer and sharing of files across remote networks such as the Internet. Control program **71** can further support remote network services, such as remote terminal access (Telnet), which allows users to log onto computers coupled to the network. In addition, control program **71** additionally can support services, such as simple mail-transfer protocol (SMTP) or e-mail, and network news-transfer protocol (NNTP) or "Usenet," well-known in the art of computer networking.

It is important to note that, while the present invention has been (and will continue to be) described in the context of a fully functional computer system, those skilled in the art can appreciate that the present invention is capable of being distributed as a program product in a variety of forms and that the present invention applies equally regardless of the particular type of signal-bearing media utilized to actually carry out the distribution. Examples of signal-bearing media include: recordable-type media, such as floppy discs, hard-disk drives, audio CDs and CD ROMs, and transmission-type media, such as digital and analog communication links. **FIG. 2** additionally depicts a CD controller **31** for controlling a CD system **33**. CD system **33** may run audio CDs or CD-ROMs, both well known in the art of digital electronic media. CD system **33** is a sound or data reproduction system that utilizes light to detect audio and data signals produced by digital recording on a CD.

Expansion cards also may be added to system bus **20**, such as disk controller **62**, which provides a hardware interface for hard-disk unit **64**. Empty slots **66** are provided so that other peripherals, adapters, and devices may be added to system unit **12** of **FIG. 1**. A network card **67** additionally can be connected to system bus **20** in order to link system unit **12** of **FIG. 1** to other data-processing system networks in a client/server architecture or to groups of computers and associated devices which are connected by communications facilities. Those skilled in the art will appreciate that the hardware depicted in **FIG. 2** may vary for specific applications. For example, other peripheral devices, such as: optical-disk media, audio adapters, or chip-programming devices, such as PAL or EPROM programming devices and the like also may be utilized in addition to or in place of the hardware already depicted. Note that any or all of the above components and associated hardware may be utilized in various embodiments. However, it can be appreciated that any configuration of the aforementioned system may be used for various purposes according to a particular implementation.

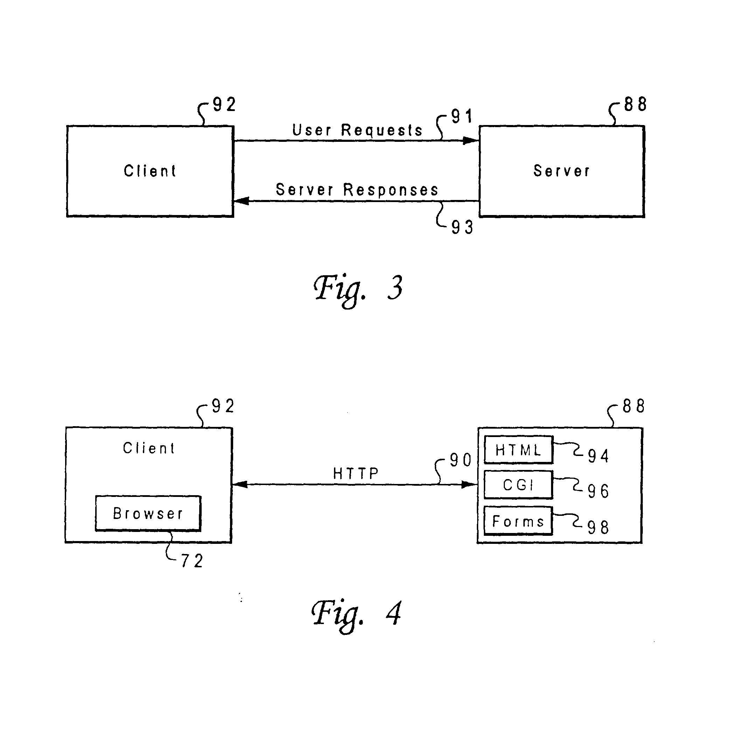

In **FIG. 3**, **FIG. 4**, and **FIG. 5**, like parts are indicated by like numbers. **FIG. 3** illustrates a block diagram illustrative of a client/server architecture which can be utilized in accordance with the method and system of the present invention. In **FIG. 3**, user requests **91** for news are sent by a client application program **92** to a server **88**. Server **88** can be a remote computer system accessible over a remote network such as the Internet. Server **88** performs scanning and searching of raw (e.g., unprocessed) information sources (e.g., newswire feeds or newsgroups) and, based upon these user requests, presents the filtered electronic information as server responses **93** to the client process. The client process may be active in a first computer system, and the server process may be active in a second computer system and communicate with the first computer system over a communications medium, thus providing distributed functionality and allowing multiple clients to take advantage of the information-gathering capabilities of the server.

**FIG. 4** illustrates a detailed block diagram of a client/server architecture which can be utilized in accordance with the method and system of the present invention. Although the client and server are processes which are operative within two computer systems, these processes being generated from a high-level programming language (e.g., PERL), which is interpreted and executed in a computer system at run-time (e.g., a workstation), it can be appreciated by one skilled in the art that they may be implemented in a variety of hardware devices, either programmed or dedicated.

Client **92** and server **88** communicate using the functionality provided by HTTP. Active within client **92** is a first process, browser **72**, which establishes the connections with server **88**, and presents information to the user. Such browsers are often referred to in the art of computer networking as "web browsers." Any number of commercially or publicly available browsers may be utilized in accordance with a preferred embodiment of the present invention. For example, the Mosaic-brand browser available from the National Centre for Supercomputing Applications (NCSA) in Urbana-Champaign, Illinois, can be utilized with a preferred embodiment of the present invention. Other browsers, such as Netscape™, Netcruiser, or the Lynx-brand browsers or others which are available and provide the functionality specified under HTTP can be utilized with the present invention.

Server **88** executes the corresponding server software which presents information to the client in the form of HTTP responses **90**. The HTTP responses **90** correspond with web "pages," which can be represented by utilizing Hypertext Markup Language (HTML), or other data generated by server **88**. For example, under the Mosaic-brand browser, in addition to HTML functionality **94** provided by server **88**, a Common Gateway Interface (CGI) **96** is provided which allows the client program to direct server **88** to commence execution of a specified program contained within server **88**. This may include a search engine which scans received information in the server for presentation to the user controlling the client. Using this interface, and HTTP responses **90**, the server may notify the client of the results of that execution upon completion. Common Gateway Interface (CGI) **96** is one form of a "gateway," a device utilized to connect dissimilar networks (i.e., networks utilizing different communication protocols) so that electronic information can be passed from one network to the other. Gateways transfer electronic information, converting such information to a form compatible with the protocols used by the second network for transport and delivery.

In order to control the parameters of the execution of this server-resident process, the client may direct the filling out of certain "forms" from the browser. This is provided by the "fill-in-forms" functionality (i.e., forms **98**), which is provided by some browsers, such as the Mosaic brand browser described herein. This functionality allows the user via a client application program to specify terms in which the server causes an application program to function (e.g., terms or keywords contained in the types of stories/articles which are of interest to the user).

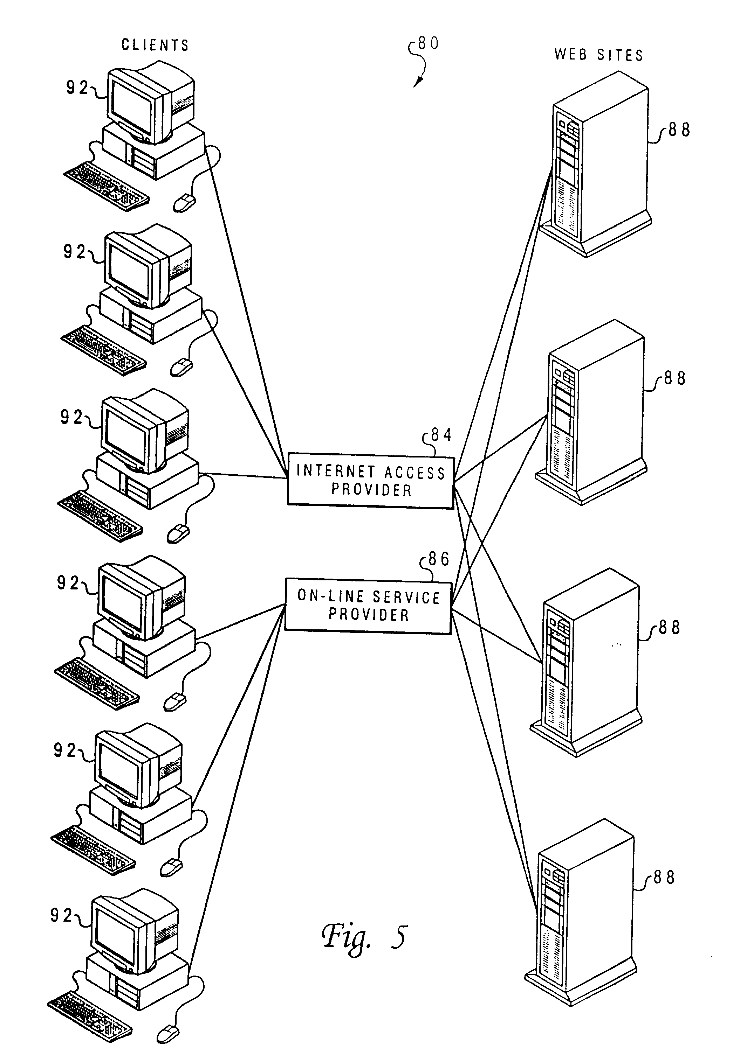

**FIG. 5** is a diagram illustrative of a computer network **80** which can be implemented in accordance with the method and system of the present invention. Computer network **80** is representative of a remote network, specifically the Internet, a known computer network based on the client-server model discussed earlier. Conceptually, the Internet includes a large network of servers **88** which are accessible by clients **92**, typically users of personal computers, through some private Internet-access provider **84** (e.g., such as Internet America) or an on-line service provider **86** (e.g., such as America On-Line, Prodigy, Compuserve, and the like). Each of the clients **92** may run a browser, a known software tool utilized to access servers **88** via the access providers **84**. Each server **88** operates a web site which supports files in the form of documents and pages. A network path to servers **88** is identified by a Universal Resource Locator having a known syntax for defining a network collection.

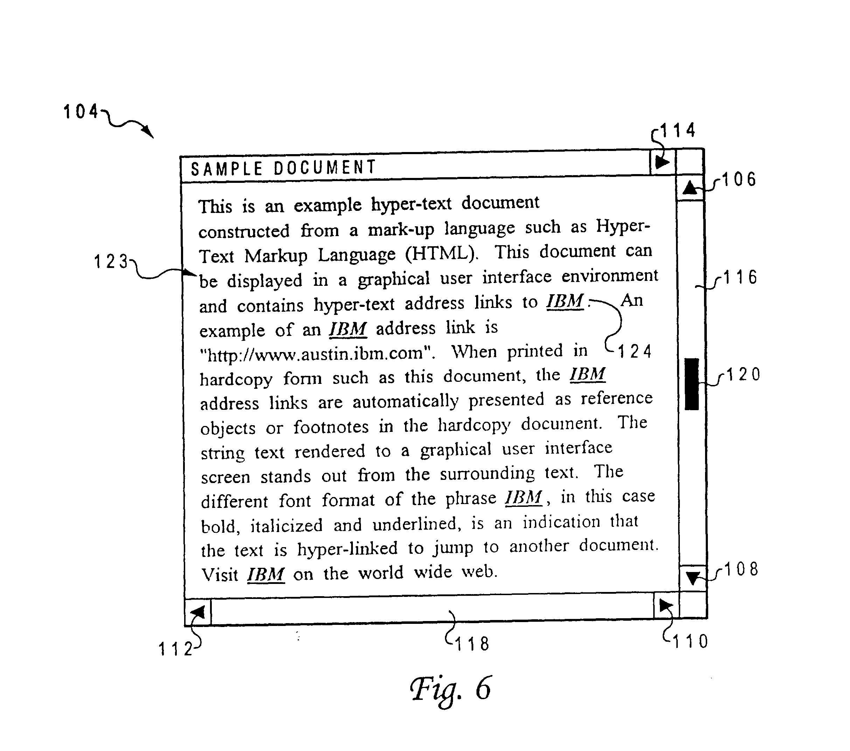

**FIG. 6** illustrates an example hypertext document **123** contained within a graphical user interface window **104** which can be utilized in accordance with the method and system of the present invention. Window **104** displays a portion of a hypertext document **123** constructed from a mark-up language, such as Hypertext Mark-up Language (HTML). The size and position of elevator **120** within scroll bar **116** corresponds to the size and position of the current viewable page in relation to hypertext document **123**. Hypertext document **123** can be accessed from a data-processing system contained within a remote network, such as the Internet.

In the example of **FIG. 6**, in view of the fact that hypertext document **123** includes too many pages to view simultaneously, the user can position a mouse cursor over up-arrow section **106** or down-arrow section **108** of scroll bar **116** and click a pointing device (e.g., a mouse) to scroll hypertext document **123** upward or downward, as appropriate. A horizontal scroll bar **118** includes arrow section **112** and arrow section **110** for scrolling hypertext document **123** respectively left or right. Also, an optional arrow section **114** allows a user to scroll the document right. Thus, the graphical user interface that contains window **104** and hypertext document **123** is a type of computer display format that enables a user to choose commands, start programs, and see lists of files and other options by pointing to pictorial representations (i.e., icons) and lists of menu items on the screen. Choices can generally be activated either with a keyboard or a mouse.

Hypertext document **123** contains specific string text **124** rendered on the screen by the graphical user interface to stand out from the surrounding text. String text **124** is rendered in a different format. In the example of **FIG. 6,** string text **124** is rendered as ***IBM.*** The different font format of string text **124** is an indication that the text is hyper-linked to "jump" to another document. When a user "clicks" on string text **124** with a mouse or other pointing device, the graphical user interface shifts the presently viewed hypertext document **123** to another hyper-linked document.

According to a preferred embodiment of the present invention, a collaboration mechanism is provided between properties requested by an electronic on-line form and Personal Information Properties (PIPs) that are created and maintained locally at a remote network site (e.g., at a user's computer). The collaboration mechanism is divided into three portions. First, the collaboration mechanism includes the PIP itself. Second, the collaboration mechanism includes a PIP index. Third, the collaboration mechanism includes PIP customisers.

The PIPs are composed of recognized typed components, starting with a core set of properties that appear in a very high percentage of on-line forms. For example, a suggested list of starting PIPs that meet this criteria might appear as follows:
a) Name
b) Address
c) Email
d) Title
e) Sex

These PIP components may in themselves be containers of other PIPs. For example, a "Name" PIP might be composed of a Forename PIP, a Surname PIP, and a Middlename PIP. Such PIPs are created as "typed beans," well-known in the computer arts. The simplest definition of a PIP is as follows: Type, UserName, Values - Set of (Value, Data Type), and Contained PIPs - set of (PIPs). **FIG. 7** depicts an example personal information property table **140**, in accordance with a preferred embodiment of the present invention. Table **140** presents an example of a name PIP.

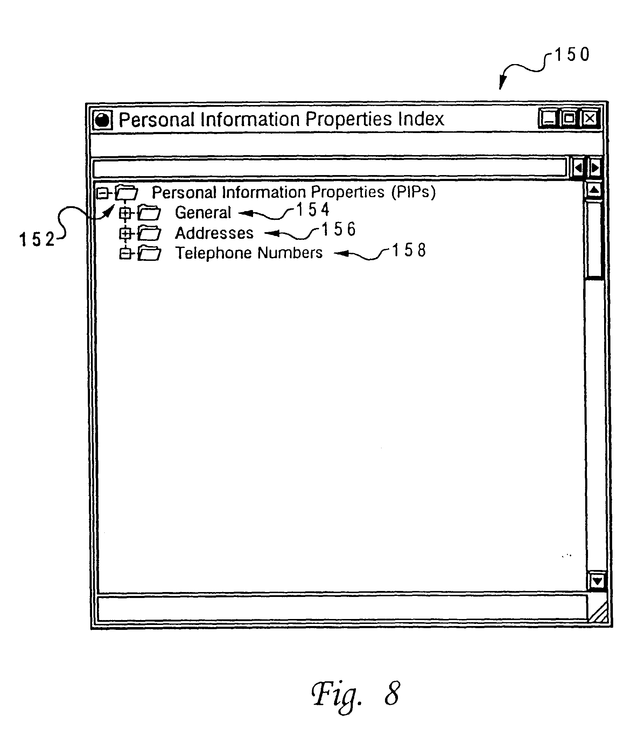

In **FIG. 8**, **FIG. 9**, and **FIG. 10**, like parts are indicated by like reference numerals. **FIG. 8** illustrates a graphical user interface window **150** in which a personal information properties (PIP) index **152** is displayed, in accordance with a preferred embodiment of the present invention. PIP index **152** includes a general information folder **154**, an address folder **156** and a folder **158** containing telephone numbers. PIP index **152** is the container of all PIPs that reside on the user's computer. Such an index is analogous to a "bookmark" mechanism, commonly associated with web browsers. The PIP index is thus similar to the bookmark mechanism that allows users to maintain, query, and add to, an URL links list. The purpose of the PIP index, however, is to allow the user the ability to centrally define a set of personal information that can be utilized by other pieces of software that collaborate with the PIP index and understand PIP objects.

Thus, following the "bookmark" metaphor, users can create their own folders to organize different pieces of information about themselves Each user can also add PIPs to the list of central information. Thus, a preferred embodiment of the present invention includes an "Add to..." capability, which allows the list of potential PIPs to be controlled by the user and expanded as required. The user can also take data from the PIP index and utilize it to populate fields in software that understands the PIP component model. In addition, users can maintain their own personal data centrally and utilize this datastore across varying applications.

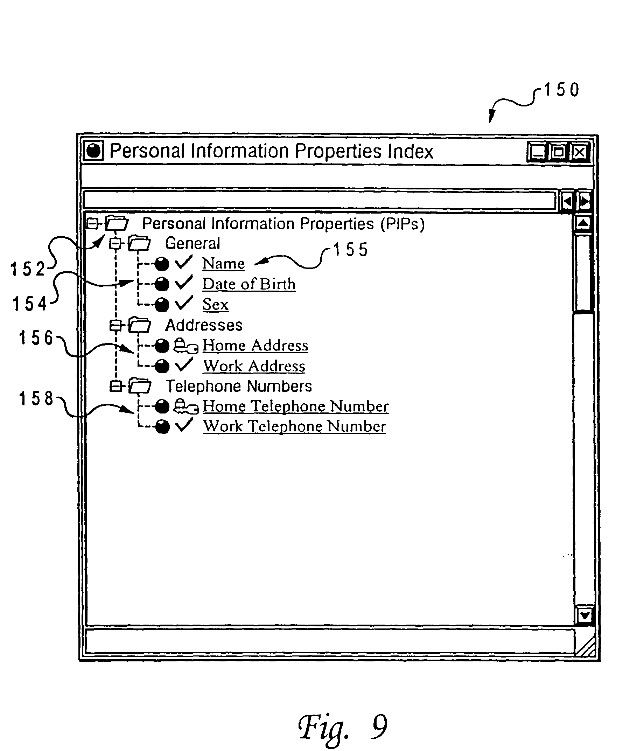

**FIG. 9** depicts a graphical user interface window **150** in which a PIP index **152** with expanded folders is displayed, in accordance with a preferred embodiment of the present invention. A user can expand the folders contained within PIP index **152** to reveal additional PIPs. For example, general information folder **152** is expanded within window **150** to reveal information such as date of birth, sex and name. Name **155** is specifically shown as an example PIP contained within general information folder **154**. Contained within address folder **154** are PIPs related to a home address and work address. Within folder **158** are home and work telephone numbers.

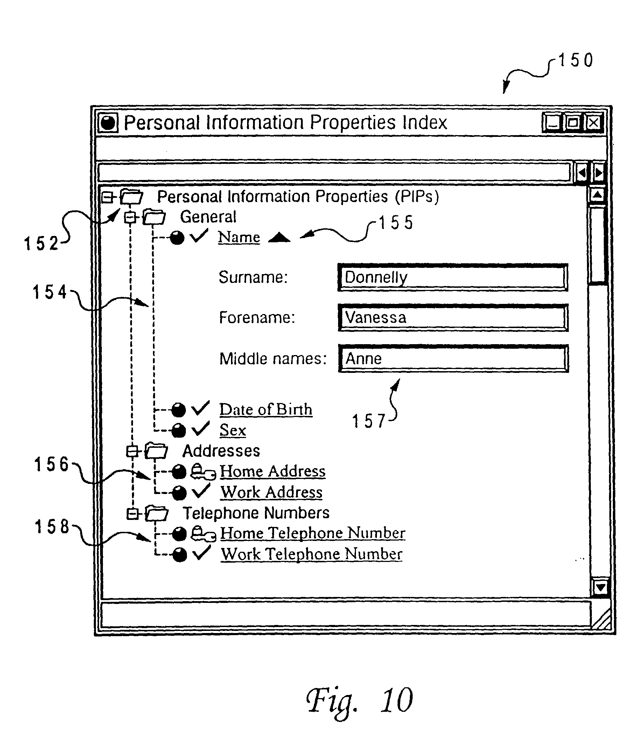

**FIG. 10** illustrates a graphical user interface window **150** in which are displayed PIP index **152**, including expanded index folders and a PIP customiser **157**, in accordance with a preferred embodiment of the present invention. PIP customiser **157** includes graphical areas in which users may input PIPs. In the example illustrated in **FIG. 10**, name **155** is expanded to reveal PIP customiser **157**. The PIP customiser is the editor that allows the values for a PIP to be entered by a user. The viewer on the PIP index presents an interface of PIP customisers that allow users to enter PIP values such as a forename, surname, address, etc. Traditionally, for a surname PIP customiser, the user would see a simple entry field that allows the entry of a text string. PIP customisers have a direct relationship to the PIP that they set and query, in as much that they provide the capability to set and display the PIP value within the user interface. Additionally PIP customisers can provide extra logic that deals with formatting, validation and presentation. Thus, a number of different customisers can potentially be available for a particular PIP type.

The PIP customiser is capable of being embedded within an on-line form or within any HTML layout or Java™ application. Java™ is an object-oriented programming language well-known in the computer arts, developed by Sun Microsystems, Inc. Tabbing into a PIP customiser field automatically creates a data link between that component and the PIP index that resides locally on a user's machine. If a type match is found between the PIP customiser and a PIP that resides in the index, the field is automatically populated with the value that is within the index.

Alternatively, in a preferred embodiment of the present invention, there can exist a button located at the top of the form layout which queries whether a user desires an automatic search of the PIP index for matching values. Upon selection of this particular button, a data link is automatically constructed. A layout queries the embedded PIP types within the forms against the types that are maintained within the PIP index, and subsequently populate the values within the form if a match is encountered.

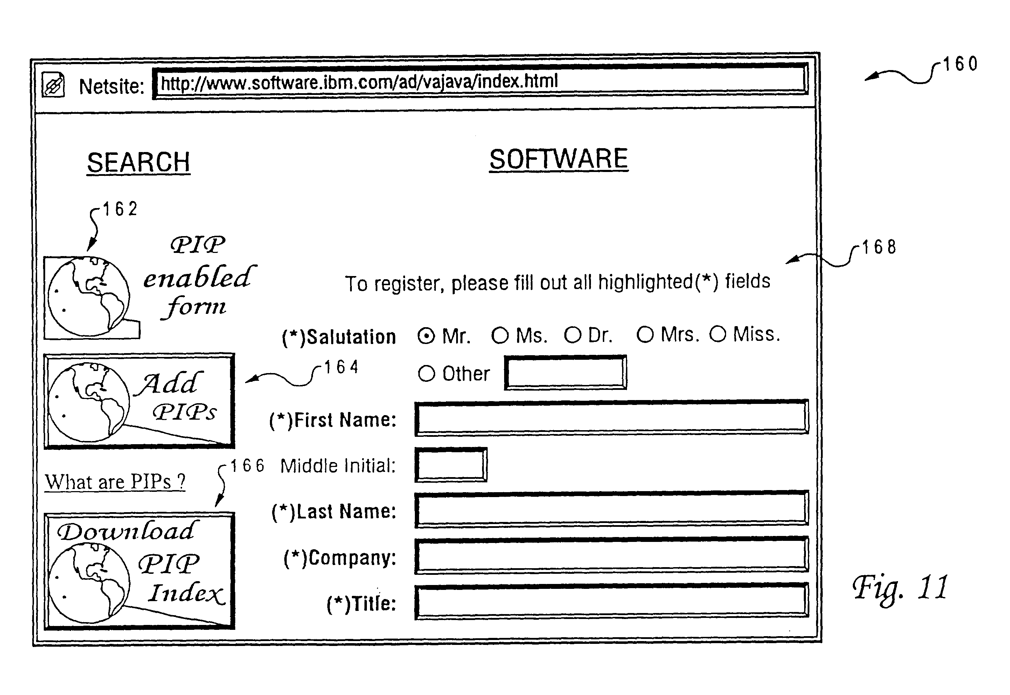

Another service provided by the PIP index is the ability to "grow" the index (i.e., add new types to the list). On a form layout, a button may be added that asks the user if the user wishes to "Add new PIPs to the PIP Index." Upon selection, this buttons presents the user with the new types that are available within the form, along with their current values entered by the user. The user can choose to either add them all, or select which ones to add. The user can also set or alter values maintained within this interface. Adding the new PIP types will add these PIPs to the PIP index in a similar manner that the user adds links to a bookmark list. The user can then return to the PIP Index interface and organize these new properties in a better logical structure if required. **FIG. 11** depicts personal information properties service buttons capable of being embedded within an on-line form, in accordance with a preferred embodiment of the present invention. An "Add PIPs" button **164**, PIP Enabled Form button **162** and Download PIP Index button **166** are associated with an on-line form **168** having an interactive query field. Those skilled in the art will appreciate that additional buttons can be associated with a web page having an interactive query field. For example, a button that asks a user to add new fields to the PIP index can also be implemented in accordance with a preferred embodiment of the present invention.

The PIP index also offers the capability of marking some properties as "sensitive." If a property is labelled "sensitive," any request for the property value triggers a the display of a dialog box that requires the user to confirm whether this value should be provided to the requester. This would then alert the user that an application or electronic form was attempting to access sensitive data from their PIP Index. For example, a yellow key might indicate sensitive properties. The user can thus toggle whether the property is sensitive or not by selecting an appropriate yellow graphic object. A "non-sensitive" property is provided when requested by any application or "applet." An "applet," well-known in the computer arts, is a small piece of code that can be transported over the Internet and executed on the recipient's machine. The term is particularly utilized in reference to programs that are embedded in line as objects in HTML documents on the World Wide Web. Thus, non-sensitive settings can be indicated by a blue mark graphic. If, however, the property is marked as sensitive (e.g., a user's home address) every time a form or application makes a request for this property, a dialog box appears asking the user whether or not the user wishes this information to be passed on to the requesting program.

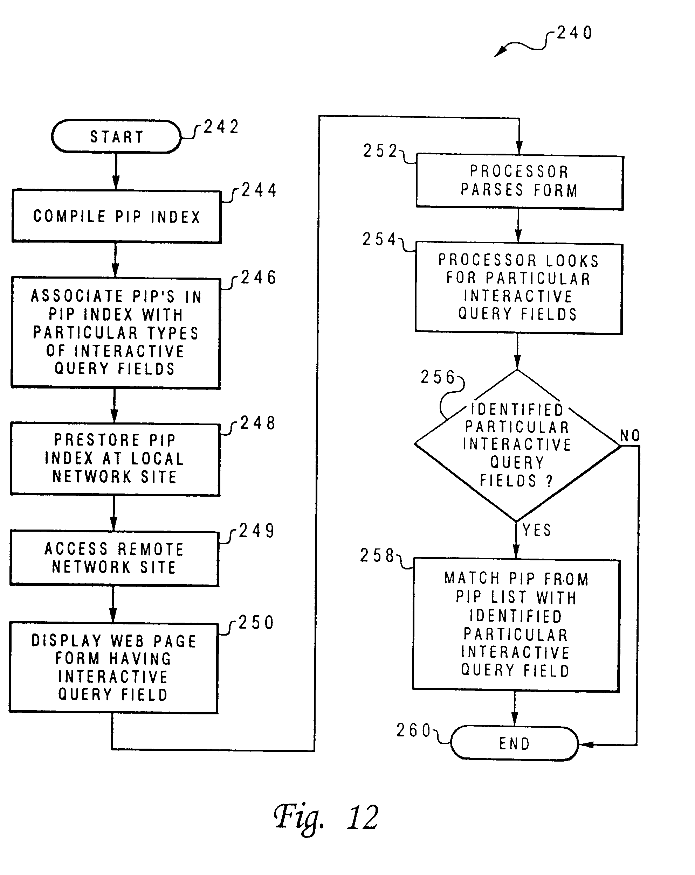

**FIG. 12** depicts a flowchart of operations **240** illustrating a method for allowing predefined personal user information to be automatically accessed and utilized by remote network sites having interactive query fields, in accordance with a preferred embodiment of the present invention. It can be appreciated by those skilled in the art that **FIG. 12** presents a self-consistent sequence of steps leading to a desired result. The steps are those requiring physical manipulation of physical quantities. Usually, although not necessarily, these quantities take the form of electrical or magnetic signals capable of being stored, transferred, combined, compared, and otherwise manipulated. It has proven convenient at times by those skilled in the art, to refer to these signals as bits, values, elements, symbols, characters, terms, numbers, or the like. It should be borne in mind, however, that all of these and similar terms are to be associated with the appropriate physical quantities and are merely convenient labels applied to these quantities.

Further, the manipulations performed are often referred to in terms, such as adding Or comparing, which are commonly associated with mental operations performed by a human operator. No such capability of a human operator is necessary or desirable in most cases in any of the operations described herein which form part of the present invention; the operations are machine operations. Useful machines for performing operations of a preferred embodiment of the present invention include data-processing systems such as general purpose digital computers or other similar devices. In all cases the distinction between the method operations in operating a computer and the method of computation itself should be borne in mind. The present invention relates to method steps for operating a computer, such as computer **10** of **FIG. 1** and **FIG. 2**, in processing electrical or other (e.g. mechanical, chemical) physical signals to generate other desired physical signals.

Thus, as depicted at block **242**, the process is initiated. As illustrated at block **244**, a PIP Index as described herein, is compiled. As depicted at block **246**, each PIP included within the compiled PIP Index is associated with a particular type of interactive query field. For example, a "lastname" included in the PIP Index is associated with those types of interactive query fields that normally prompt users to enter their last names. As described at block **248**, the PIP index is stored at a local network site. This can be accomplished by loading the compiled PIP list into a working directory of a computer system, such as computer **10** of **FIG. 1** and **FIG. 2**.

As described at block **249**, a remote network site is accessed according to the client/server architecture and computer network described and depicted in **FIG. 3** to **FIG. 5** herein. As indicated at block **250**, upon successful access of the remote network site, a web page is displayed at a local network site in a client/server network. The web page includes a form having interactive query fields in which users may enter personal information (e.g., names, address, date-of-birth, and so forth).

As depicted at block **252**, a processor associated with the local network site (e.g, CPU **22** of **FIG. 2**) is instructed to parse the form displayed on the web page. That is, the processor breaks input derived from the web page into smaller chunks so that a program can subsequently act upon the information. The processor thereafter, as illustrated at block **254**, looks for particular interactive fields that may be associated with PIPs included within the PIP index.

As described at block **256**, a test is then performed to determine whether or not all particular interactive query fields have been identified. If it is determined, that all interactive query fields have been identified, then as depicted at block **258**, the PIPs included within the compiled PIP list are matched with appropriate interactive query fields (i.e., the appropriate PIPs are automatically entered within the appropriate interactive query fields). If it is determined that no particular interactive query fields are identified, then as described at block **256** (i.e., a "no" response), the process thereafter terminates, as indicated at block **260**.

While the invention has been particularly shown as described with reference to a preferred embodiment, it will be understood by those skilled in the art that various changes in form and detail may be made therein without departing from the spirit and scope of the invention. Utilization of the Internet in association with the method and system described herein is not a necessary feature of the present invention. For example, the present invention is applicable to other communication networks besides the Internet, including so-called "intranets" (i.e., networks that are internal to particular organizations). The Internet, as described herein, is merely one example of a remote network that can be utilized in accordance with a preferred embodiment of the present invention.

## Claims

1. A method in a computer network for allowing predefined personal user information to be automatically accessed and utilized by remote network sites having interactive query fields, said method comprising the steps of:
compiling (244) a personal user information list (152) comprising personal user information that may be utilized in association with on-line electronic forms;
prestoring (248) said personal user information list at a local network site;
accessing (249) a remote network site having an interactive query field wherein users may enter personal user information;
automatically accessing said personal user information list, in response to accessing said remote network site having said interactive query field;
automatically entering within said interactive query field, personal user information accessed from said personal user information list, such that said personal user information does not have to be repetitively re-keyed within said interactive query field.

2. A method as claimed in claim 1 further comprising the step of associating (258) said personal user information (152) contained within said personal user information list with a particular interactive query field.

3. A method as claimed in claim 2 wherein the step of automatically entering within said interactive query field, personal user information accessed from said personal user information list, such that said personal user information does not have to be repetitively re-keyed within said interactive query field, further comprises the step of:
automatically entering within said particular interactive query field, personal user information accessed from said personal user information list, such that said personal user information is associated with said particular interactive query field, wherein said personal user information does not have to be repetitively re-keyed within said interactive query field.

4. A method as claimed in claim 4 wherein the step of prestoring (248) said personal user information list at a local network site, further comprises the step of:
prestoring said personal user information list at a local network site, such that said personal user information may be accessed by a browser application maintained at said local network site.

5. A method as claimed in claim 4 wherein the step of compiling a personal user information list comprising personal user information that may be utilized in association with on-line electronic forms, further comprises the step of:
compiling a personal user information list comprising personal information properties that may be utilized in association with on-line electronic forms.

6. A system in a computer network for allowing predefined personal user information to be automatically accessed and utilized by remote network sites having interactive query fields, said system comprising:
means for compiling (244) a personal user information list (152) comprising personal user information that may be utilized in association with on-line electronic forms;
means for prestoring (248) said personal user information list at a local network site;
means for accessing (249) a remote network site having an interactive query field wherein users may enter personal user information;
means for automatically accessing said personal user information list, in response to accessing said remote network site having said interactive query field;
means for automatically entering within said interactive query field, personal user information accessed from said personal user information list, such that said personal user information does not have to be repetitively re-keyed within said interactive query field.

7. A system as claimed in claim 6 further comprising (258) means for associating said personal user information contained within said personal user information list with a particular interactive query field.

8. A system as claimed in claim 7 wherein said means for automatically entering within said interactive query field, personal user information accessed from said personal user information list, such that said personal user information does not have to be repetitively re-keyed within said interactive query field, further comprises:
means for automatically entering within said particular interactive query field, personal user information accessed from said personal user information list, such that said personal user information is associated with said particular interactive query field, wherein said personal user information does not have to be repetitively re-keyed within said interactive query field.

9. A system as claimed in claim 8 wherein said means for prestoring (248) said personal user information list at a local network site, further comprises:
means for prestoring said personal user information list at a local network site, such that said personal user information may be accessed by a browser application maintained at said local network site.

10. A system as claimed in claim 9 wherein said means for compiling a personal user information list comprising personal user information that may be utilized in association with on-line electronic forms, further comprises:
means for compiling a personal user information list comprising personal information properties that may be utilized in association with on-line electronic forms.
